# EUROPÄISCHE PATENTSCHRIFT

(11) **EP 3 854 556 B1**
(45) Veröffentlichungstag und Bekanntmachung des Hinweises auf die Patenterteilung: **06.03.2024**
(21) Anmeldenummer: 20153081.3
(22) Anmeldetag: 22.01.2020
(51) Int. Cl.: B28D 1/04, B23D 47/12, B27B 17/08, B28D 7/00

(54) **VERFAHREN ZUM BETREIBEN EINES HANDGEFÜHRTEN BEARBEITUNGSGERÄTS UND HANDGEFÜHRTES BEARBEITUNGSGERÄT**
HANDHELD PROCESSING DEVICE AND METHOD FOR OPERATING SAME
PROCÉDÉ DE FONCTIONNEMENT D'UN APPAREIL D'USINAGE GUIDÉ À LA MAIN ET APPAREIL D'USINAGE GUIDÉ À LA MAIN

(43) Veröffentlichungstag der Anmeldung: 28.07.2021
(73) Patentinhaber: Andreas Stihl AG & Co. KG, 71336 Waiblingen (DE)
(72) Erfinder: HAAS, Alexander, 73565 Spraitbach (DE); MÜLLER, Edgar, 73061 Ebersbach an der Fils (DE); NEMEC, Christian, 73105 Dürnau (DE)
(74) Vertreter: Patentanwälte Ruff, Wilhelm, Beier, Dauster & Partner mbB

(56) Entgegenhaltungen:
- DE-A1-102014 206 268
- US-A1- 2007 084 613
- US-A1- 2008 110 148
- US-A1- 2012 103 643

## Beschreibung

### ANWENDUNGSGEBIET UND STAND DER TECHNIK

Die Erfindung bezieht sich auf ein Verfahren zum Betreiben eines handgeführten Bearbeitungsgeräts und ein handgeführtes Bearbeitungsgerät.

Die US 2007/0084613 A1 offenbart ein Kontrollsystem zur Verwendung in einem Elektrowerkzeug. Das Kontrollsystem umfasst: einen Drehratensensor mit einer Resonanzmasse und einen Kontroller, der elektrisch mit dem Drehratensensor verbunden ist. Der Drehratensensor erfasst eine laterale Verschiebung der Resonanzmasse und erzeugt ein Signal, das die erfasste laterale Verschiebung anzeigt, so dass die laterale Verschiebung direkt proportional zu einer Drehzahl ist, mit der sich das Elektrowerkzeug um eine Achse der Drehwelle dreht. Basierend auf dem erzeugten Signal leitet der Kontroller einen Schutzbetrieb ein, um eine weitere unerwünschte Drehung des Elektrowerkzeugs zu vermeiden. Der Kontroller kann sich dafür entscheiden, das auf die Welle aufgebrachte Drehmoment auf einen Wert ungleich Null zu reduzieren, der es dem Bediener ermöglicht, die Kontrolle über das Werkzeug wiederzuerlangen.

Die US 2008/0110148 A1 offenbart einen motorbetriebenen Grasmäher umfassend eine Betriebseinheit mit einem Grasschneider; eine Motoreinheit mit einem Elektromotor und eine Leistungsquelleneinheit mit einer Batterie, wobei die Betriebseinheit mit einem ersten Mittel zum Beobachten, ob die Motoreinheit aus irgendeinem Grund gesperrt ist, und einem zweiten Mittel zum Setzen der Motoreinheit in einen Kriechbetrieb als Reaktion auf irgendein Signal von dem ersten Mittel versehen ist anzeigend, dass sich die Motoreinheit in einem Sperrzustand befindet und offenbart somit die Präambel des Hauptanspruches 1.

### AUFGABE UND LÖSUNG

Der Erfindung liegt als Aufgabe die Bereitstellung eines Verfahrens zum Betreiben eines handgeführten Bearbeitungsgeräts und eines handgeführten Bearbeitungsgeräts zugrunde, das jeweils verbesserte Eigenschaften aufweist.

Die Erfindung löst diese Aufgabe durch die Bereitstellung eines Verfahrens mit den Merkmalen des Anspruchs 1 und eines handgeführten Bearbeitungsgeräts mit den Merkmalen des

Anspruchs 13. Vorteilhafte Weiterbildungen und/oder Ausgestaltungen der Erfindung sind in den abhängigen Ansprüchen beschrieben.

Das erfindungsgemäße, insbesondere automatische, Verfahren ist zum, insbesondere automatischen, Betreiben eines handgeführten Bearbeitungsgeräts ausgebildet bzw. konfiguriert. Das Bearbeitungsgerät weist ein rotierendes und/oder umlaufendes bzw. rotatorisches Schneidwerkzeug, ein Elektromotorantriebssystem und ein benutzerbetätigbares Bedienelement auf. Das Elektromotorantriebssystem ist zum Erzeugen eines Drehmoments zum Antreiben, insbesondere zum Rotieren und/oder zum Umlaufen, des Schneidwerkzeugs ausgebildet bzw. konfiguriert. Das Verfahren weist die Schritte auf: a) automatisches bzw. selbstständiges Überwachen, ob ein Blockier-Kriterium bzw. Verklemm-Kriterium erfüllt ist, insbesondere oder nicht, insbesondere unabhängig von einem Benutzer des Bearbeitungsgeräts. Das Blockier-Kriterium ist für eine Blockierung des Schneidwerkzeugs charakteristisch, b), falls bzw. während das Blockier-Kriterium erfüllt ist und das Bedienelement betätigt ist, automatisches bzw. selbstständiges Erniedrigen des von dem Elektromotorantriebssystem erzeugten Drehmoments und zeitlich danach automatisches bzw. selbstständiges Erhöhen des von dem Elektromotorantriebssystem erzeugten Drehmoments, insbesondere unabhängig von einer Betätigung des Bedienelements durch den Benutzer.

Im Betrieb des Bearbeitungsgeräts, insbesondere beim Rotieren und/oder beim Umlaufen, des Schneidwerkzeugs, kann das Schneidwerkzeug durch ein zu schneidendes Bearbeitungsstück oder einen festen Gegenstand im Bearbeitungsstück blockiert bzw. verklemmt werden, insbesondere bei einer zu hohen Vorschubkraft. Das Verfahren ermöglicht, dass das Schneidwerkzeug automatisch bzw. ohne Steuerung oder Regelung durch den Benutzer losgerissen werden kann. Somit ermöglicht dies, dass die Blockierung des Schneidwerkzeugs automatisch gelöst werden kann. Zusätzlich oder alternativ ermöglicht dies, dass der Benutzer die Blockierung, insbesondere haptisch und/oder akustisch, wahrnehmen kann und somit das Schneidwerkzeug entlasten kann, insbesondere eine Vorschubkraft erniedrigen kann. Somit ermöglicht dies, dass die Blockierung des Schneidwerkzeugs gelöst werden kann. Insbesondere ermöglicht dies, dass ein Benutzer des Bearbeitungsgeräts die Betätigung des Bedienelements nicht zu verändern, insbesondere zu unterbrechen, braucht.

Insbesondere kann das Verfahren als Freifahrfunktion bezeichnet werden.

Das Bearbeitungsgerät kann ein bodengeführtes oder handgetragenes Bearbeitungsgerät sein. Zusätzlich oder alternativ kann handgeführtes, insbesondere handgetragenes, Bearbeitungsgerät bedeuten, dass das Bearbeitungsgerät eine Masse von maximal 50 Kilogramm (kg), insbesondere von maximal 20 kg, insbesondere von maximal 10 kg, insbesondere von maximal 5 kg, und/oder von minimal 1 kg, insbesondere von minimal 2 kg, aufweisen kann. Weiter zusätzlich oder alternativ kann das Bearbeitungsgerät ein Garten-, Forst- und/oder Baubearbeitungsgerät sein.

Das Verfahren und/oder das Bearbeitungsgerät, insbesondere das Elektromotorantriebssystem, können/kann zum Rotieren und/oder zum Umlaufen des Schneidwerkzeugs in, insbesondere nur, einer, insbesondere einzigen, Richtung, insbesondere einer Rotationsrichtung, ausgebildet sein. In anderen Worten: das Verfahren und/oder das Bearbeitungsgerät, insbesondere das Elektromotorantriebssystem, brauchen/braucht bzw. können/kann nicht zum Rotieren und/oder zum Umlaufen des Schneidwerkzeugs in einer entgegensetzten Richtung bzw. zu einer Richtungsumkehr ausgebildet sein, insbesondere falls das Blockier-Kriterium erfüllt ist. Weiter zusätzlich oder alternativ können/kann das Rotieren und/oder das Umlaufen die Form einer geschlossenen Kurve beschreiben.

Das Verfahren und/oder das Bearbeitungsgerät, insbesondere das Elektromotorantriebssystem, können/kann zum Erzeugen des Drehmoments abhängig von einer Betätigung des Bedienelements ausgebildet sein. Zusätzlich oder alternativ können/kann das Verfahren und/oder das Bearbeitungsgerät, insbesondere das Elektromotorantriebssystem, zum Erfassen, ob das Bedienelement betätigt ist, insbesondere oder nicht, mittels eines Schalters des Bearbeitungsgeräts ausgebildet sein. Insbesondere kann das Bedienelement zum Betätigen des Schalters ausgebildet sein.

Das Bearbeitungsgerät braucht oder kann nicht ein Verbrennungsmotorantriebssystem aufweisen.

Das Verfahren kann ausgeführt werden, falls das Bearbeitungsgerät eingeschaltet ist. Anders formuliert: das Verfahren braucht oder kann nicht aufgeführt werden, falls das Bearbeitungsgerät nicht eingeschaltet bzw. ausgeschaltet ist. Zusätzlich oder alternativ kann der Schritt a) ausgeführt werden, falls das Bedienelement betätigt ist. In anderen Worten: der Schritt a) braucht oder kann nicht ausgeführt werden, falls das Bedienelement nicht betätigt ist. Weiter zusätzlich oder alternativ kann der Schritt a) andauernd ausgeführt werden. Weiter zusätzlich oder alternativ braucht oder kann der Schritt b) nicht ausgeführt werden, falls das Blockier-Kriterium nicht erfüllt ist und/oder das Bedienelement nicht betätigt ist. Anders formuliert: der Schritt b) kann ausgeführt werden, bis das Blockier-Kriterium nicht mehr erfüllt ist. Weiter zusätzlich oder alternativ kann der Schritt b) zeitgleich und/oder zeitlich nach dem Schritt a) ausgeführt werden.

Im Schritt b) kann das Drehmoment von einem Wert für den Fall, als wäre das Blockier-Kriterium nicht erfüllt, erniedrigt werden. Zusätzlich oder alternativ kann das Elektromotorantriebssystem zum Erzeugen des Drehmoments mittels Pulsdauermodulation, insbesondere Pulsweitenmodulation, ausgebildet sein. Im Schritt b) können/kann das Erniedrigen und/oder das Erhöhen von der Pulsdauermodulation verschieden sein und/oder sich jeweils über mehrere Pulse der Pulsdauermodulation zeitlich erstrecken.

Automatisch kann unabhängig von dem Benutzer, insbesondere der Betätigung des Bedienelements durch den Benutzer, bedeuten.

Das Blockier-Kriterium ist, dass trotz, insbesondere maximal, betätigtem Bedienelement und/oder trotz, insbesondere maximal, erzeugtem Drehmoment größer Null und/oder trotz eines das Drehmoment bewirkenden, insbesondere maximalen, Stroms größer Null eine Drehzahl des Elektromotorantriebssystems und/oder des Schneidwerkzeugs gleich oder kleiner als ein Blockier-Drehzahl-Untergrenzwert ist. Dies ermöglicht, die Blockierung des Schneidwerkzeugs zu erkennen bzw. zu überwachen. Insbesondere kann der Blockier-Drehzahl-Untergrenzwert kleiner als ein üblicher Wert der Drehzahl für den Fall sein, wenn das Schneidwerkzeug nicht blockiert ist. Insbesondere kann der Blockier-Drehzahl-Untergrenzwert Null sein. Zusätzlich oder alternativ können das Verfahren und/oder das Bearbeitungsgerät, insbesondere das Elektromotorantriebssystem, zum Steuern oder Regeln einer Soll-Drehzahl des Elektromotorantriebssystems oder des Schneidwerkzeugs nur größer, insbesondere und nicht kleiner, als der Blockier-Drehzahl-Untergrenzwert ausgebildet sein.

Das Bearbeitungsgerät ist eine Säge, insbesondere eine Kettensäge, ein Gesteinsschneider oder ein Trennschleifer.

Das Bedienelement ist benutzerstellbar.

Das Verfahren weist den Schritt auf: c) falls bzw. während das Blockier-Kriterium nicht erfüllt ist und das Bedienelement betätigt ist, automatisches bzw. selbstständiges Steuern oder automatisches bzw. selbstständiges Regeln des von dem Elektromotorantriebssystem erzeugten Drehmoments zum Erreichen einer Soll-Drehzahl, insbesondere eines Werts der Soll-Drehzahl, des Elektromotorantriebssystems und/oder des Schneidwerkzeugs, insbesondere unabhängig von der Betätigung des Bedienelements durch den Benutzer. Dies ermöglicht, dass das Schneidwerkzeug das zu schneidende Bearbeitungsstück schneiden kann. Insbesondere braucht oder kann der Schritt c) nicht ausgeführt werden, falls das Blockier-Kriterium erfüllt ist und/oder das Bedienelement nicht betätigt ist. In anderen Worten: der Schritt c) kann ausgeführt werden, bis das Blockier-Kriterium erfüllt ist. Zusätzlich oder alternativ kann der Schritt c) zeitlich vor und/oder zeitlich nach dem Schritt b) ausgeführt werden. Anders formuliert: zu einem Zeitpunkt kann entweder der Schritt c) oder der Schritt b) ausgeführt werden. Weiter zusätzlich oder alternativ kann der Schritt c) zeitgleich und/oder zeitlich nach dem Schritt a) ausgeführt werden. Weiter zusätzlich oder alternativ kann im Schritt b) das Drehmoment von einem Wert zum Erreichen der Soll-Drehzahl, insbesondere eines zeitlich vorhergehenden Schritts c), erniedrigt werden. Weiter zusätzlich oder alternativ kann die Soll-Drehzahl abhängig von einer Betätigung des Bedienelements sein.

Im Schritt c) ist die Soll-Drehzahl abhängig von einer Stellung, insbesondere eines Werts der Stellung, des Bedienelements. Insbesondere kann das Bedienelement mindestens drei verschiedene Stellungen aufweisen. Insbesondere kann das Bedienelement stufenlos benutzerstellbar sein. Zusätzlich oder alternativ können/kann das Verfahren und/oder das Bearbeitungsgerät, insbesondere das Elektromotorantriebssystem, zum Erfassen der Stellung des Bedienelements mittels eines Potentiometers des Bearbeitungsgeräts ausgebildet sein. Insbesondere kann das Bedienelement zum Stellen des Potentiometers ausgebildet sein.

Ein Nicht-Blockier-Drehzahl-Untergrenzwert für die Soll-Drehzahl, insbesondere des Schritts c), ist größer, insbesondere mindestens zweimal größer, als der Blockier-Drehzahl-Untergrenzwert. Dies ermöglicht zu vermeiden, dass das Blockier-Kriterium trotz einer Nicht-Blockierung des Schneidwerkzeugs erfüllt ist.

In einer Weiterbildung der Erfindung weist das Schneidwerkzeug eine Sägekette, ein Sägeblatt, ein Schneidblatt, ein Schneidmesser, eine Schleifkette oder eine Schleifscheibe auf. Insbesondere ist das Schneidwerkzeug eine Sägekette, ein Sägeblatt, ein Schneidblatt, ein Schneidmesser, eine Schleifkette oder eine Schleifscheibe.

In einer Weiterbildung der Erfindung sind das Elektromotorantriebssystem, insbesondere ein Rotor des Elektromotorantriebssystems, und das Schneidwerkzeug kupplungsfrei, insbesondere drehfest, miteinander gekoppelt bzw. verbunden, insbesondere mechanisch. Dies ermöglicht, dass das von dem Elektromotorantriebssystem erzeugte Drehmoment schlupffrei auf das Schneidwerkzeug übertragen werden kann.

In einer Weiterbildung der Erfindung wird der Schritt b) automatisch bzw. selbstständig wiederholt, insbesondere bis ein Wiederholungsanzahl-Grenzwert erreicht ist, insbesondere unabhängig von der Betätigung des Bedienelements durch den Benutzer. Dies ermöglicht eine besonders hohe Wahrscheinlichkeit, dass die Blockierung des Schneidwerkzeugs gelöst werden kann. Zusätzlich oder alternativ ermöglicht dies, dass der Benutzer die Blockierung besonders gut wahrnehmen kann. Insbesondere kann der Wiederholungsanzahl-Grenzwert werksseitig fest eingestellt und/oder benutzereistellbar sein. Zusätzlich oder alternativ braucht oder kann der Schritt b) bei Erreichung des Wiederholungsanzahl-Grenzwerts nicht mehr wiederholt werden.

In einer Weiterbildung, insbesondere einer Ausgestaltung der Erfindung, wird das automatische Erniedrigen, insbesondere des Schritts b), mit einer Erniedrig-Zeitdauer von minimal 1 Millisekunde (ms), insbesondere von minimal 20 ms, und/oder von maximal 2 Sekunden (s), insbesondere von maximal 500 ms, insbesondere von 50 ms, ausgeführt. Zusätzlich oder alternativ wird das automatische Erhöhen, insbesondere des Schritts b), mit einer Erhöh-Zeitdauer von minimal 1 ms, insbesondere von minimal 20 ms, und/oder von maximal 2 s, insbesondere von maximal 500 ms, insbesondere von 50 ms, ausgeführt. Weiter zusätzlich oder alternativ wird das automatische Erhöhen, insbesondere des Schritts b), zeitlich nach einer Pausen-Zeitdauer von minimal 1 ms, insbesondere von minimal 20 ms, und/oder von maximal 2 s, insbesondere von maximal 500 ms, insbesondere von 250 ms, zeitlich nach dem automatischen Erniedrigen, insbesondere des Schritts b), ausgeführt. Weiter zusätzlich oder alternativ wird bei Wiederholung des Schritts b), soweit vorhanden, das automatische Erniedrigen, insbesondere des Schritts b), zeitlich nach einer Halte-Zeitdauer von minimal 0 ms und/oder von maximal 2 s, insbesondere von maximal 500 ms, zeitlich nach dem automatischen Erhöhen, insbesondere des Schritts b), ausgeführt. Dies ermöglicht, dass der Benutzer die Blockierung besonderes gut wahrnehmen kann. Zusätzlich oder alternativ ermöglicht dies, insbesondere die Erhöh-Zeitdauer, eine besonders hohe Wahrscheinlichkeit, dass die Blockierung des Schneidwerkzeugs gelöst werden kann. Insbesondere können/kann die Erniedrig-Zeitdauer und/oder die Erhöh-Zeitdauer jeweils zeitlich länger als Pulse der Pulsdauermodulation sein, soweit vorhanden. Insbesondere können Pulse eine Puls-Zeitdauer von ca. 62,5 Mikrosekunden (gleich 16 Kilohertz) aufweisen bzw. haben.

In einer Ausgestaltung der Erfindung wird im Schritt c) ein automatisches bzw. selbstständiges Erhöhen des erzeugten Drehmoments oder eines das Drehmoment bewirkenden Stroms auf einen Nicht-Blockier-Obergrenzwert begrenzt, insbesondere unabhängig von der Betätigung des Bedienelements durch den Benutzer. Insbesondere wird im Schritt b) das Drehmoment oder der Strom von dem Nicht-Blockier-Obergrenzwert erniedrigt. Zusätzlich oder alternativ wird im Schritt b) das automatische Erhöhen des erzeugten Drehmoments oder des Stroms auf einen Blockier-Obergrenzwert begrenzt. Weiter zusätzlich oder alternativ wird im Schritt b) das automatische Erniedrigen des erzeugten Drehmoments oder des Stroms auf einen Blockier-Untergrenzwert größer Null begrenzt. Insbesondere ist der Blockier-Untergrenzwert minimal 0,1-mal und/oder maximal 0,25-mal der Blockier-Obergrenzwert. Der Nicht-Blockier-Obergrenzwert und/oder der Blockier-Obergrenzwert ermöglichen/ermöglicht eine Überlastung des Elektromotorantriebssystems und/oder des Schneidwerkzeugs zu vermeiden. Zusätzlich oder alternativ ermöglicht der Blockier-Untergrenzwert größer Null eine besonders hohe Wahrscheinlichkeit, dass das Schneidwerkzeug losgerissen werden kann. Weiter zusätzlich oder alternativ ermöglicht der Blockier-Untergrenzwert größer Null, dass der Benutzer den Betrieb des Bearbeitungsgeräts, insbesondere des Elektromotorantriebssystems, wahrnehmen kann. Weiter zusätzlich oder alternativ ermöglicht der Blockier-Untergrenzwert größer Null ein, insbesondere indirektes, Erfassen einer Lage bzw. einer Position eines Rotors des Elektromotorantriebssystems oder des Schneidwerkzeugs mittels Verwenden von Strom- und/oder Spannungsinformationen des Elektromotorantriebssystems, insbesondere ohne einen Sensor zum direkten Erfassen der Lage, insbesondere im Vergleich zu einem Blockier-Untergrenzwert gleich Null. Insbesondere kann der Blockier-Obergrenzwert größer, gleich oder kleiner als der Nicht-Blockier-Obergrenzwert sein.

In einer Ausgestaltung der Erfindung ist der Blockier-Obergrenzwert abhängig von einer Anzahl der Wiederholungen des Schritts b), insbesondere wird der Blockier-Obergrenzwert abhängig von einer Anzahl der Wiederholungen des Schritts b) verkleinert, insbesondere automatisch verkleinert. Dies ermöglicht eine Überlastung des Elektromotorantriebssystems und/oder des Schneidwerkzeugs zu vermeiden.

In einer Ausgestaltung der Erfindung weist das Verfahren den Schritt auf: Erfassen, insbesondere automatisches Erfassen, insbesondere Überwachen, einer Temperatur, insbesondere eines Werts der Temperatur, des Elektromotorantriebssystems und/oder eines mit dem Bearbeitungsgerät elektrisch verbundenen Akkumulators. Der Wiederholungsanzahl-Grenzwert, der Nicht-Blockier-Obergrenzwert und/oder der Blockier-Obergrenzwert sind/ist abhängig von der erfassten Temperatur. Insbesondere werden/wird der Wiederholungsanzahl-Grenzwert, der Nicht-Blockier-Obergrenzwert und/oder der Blockier-Obergrenzwert abhängig von der erfassten Temperatur, insbesondere automatisch, eingestellt, insbesondere verkleinert. Dies ermöglicht eine Überlastung und/oder eine Abschaltung des Elektromotorantriebssystems und/oder des Akkumulators zu vermeiden. Insbesondere kann die Temperatur von einer Elektronik, insbesondere einer Leistungselektronik, und/oder einem Elektromotor des Elektromotorantriebssystems sein. Zusätzlich oder alternativ kann der Akkumulator zur Versorgung des Bearbeitungsgeräts, insbesondere des Elektromotorantriebssystems, mit elektrischer Antriebsleistung ausgebildet sein. Weiter zusätzlich oder alternativ können/kann der Wiederholungsanzahl-Grenzwert, der Nicht-Blockier-Obergrenzwert und/oder der Blockier-Obergrenzwert bei Erreichung und/oder Überschreitung eines Temperaturgrenzwerts durch die erfasste Temperatur verkleinert werden.

In einer Ausgestaltung der Erfindung ist das Bearbeitungsgerät zum elektrischen Verbinden mit verschiedenen Typen von Akkumulatoren ausgebildet bzw. konfiguriert. Die verschiedenen Typen von Akkumulatoren weisen verschiedene Maximalstromwerte auf. Das Bearbeitungsgerät ist mit einem der verschiedenen Typen von Akkumulatoren elektrisch verbunden. Das Verfahren weist den Schritt auf: Erfassen, insbesondere automatisches Erfassen, des Typs des elektrisch verbundenen Akkumulators und Bestimmen, insbesondere automatisches Bestimmen, basierend auf dem erfassten Typ den Maximalstromwert und/oder Erfassen, insbesondere automatisches Erfassen, des Maximalstromwerts des elektrisch verbundenen Akkumulators. Der Nicht-Blockier-Obergrenzwert und/oder der Blockier-Obergrenzwert sind/ist abhängig von dem Maximalstromwert. Insbesondere werden/wird der Nicht-Blockier-Obergrenzwert und/oder der Blockier-Obergrenzwert abhängig von dem Maximalstromwert eingestellt, insbesondere automatisch eingestellt. Dies ermöglicht eine Überlastung und/oder eine Abschaltung des Akkumulators zu vermeiden. Insbesondere kann der Akkumulator zur Versorgung des Bearbeitungsgeräts, insbesondere des Elektromotorantriebssystems, mit elektrischer Antriebsleistung ausgebildet sein. Zusätzlich oder alternativ können/kann der Nicht-Blockier-Obergrenzwert und/oder der Blockier-Obergrenzwert gleich oder kleiner als der Maximalstromwert sein.

In einer Weiterbildung der Erfindung weist der Schritt b) auf: falls bzw. während das Bedienelement minimal in eine Startstellung, insbesondere minimal zehn Prozent (10 %), insbesondere minimal 20 %, insbesondere minimal 50 %, insbesondere 100 %, insbesondere eines Stellbereichs bzw. eines Stellwegs des Bedienelements, gestellt ist, automatisches Erniedrigen des von dem Elektromotorantriebssystem erzeugten Drehmoments und zeitlich danach automatisches Erhöhen des von dem Elektromotorantriebssystem erzeugten Drehmoments, insbesondere unabhängig von der Stellung des Bedienelements von minimal der Startstellung. Insbesondere kann die Startstellung zum Starten des Erzeugens des Drehmoments und/oder größer Null bzw. 0% sein.

In einer Weiterbildung der Erfindung weist der Schritt b) auf: Ausgeben, insbesondere automatisches Ausgeben, insbesondere Anzeigen, eines benutzerwahrnehmbaren Blockier-Signals. Dies ermöglicht, dass der Benutzer die Blockierung besonders gut wahrnehmen kann.

Das erfindungsgemäße handgeführte Bearbeitungsgerät weist ein rotierendes und/oder umlaufendes, insbesondere das rotierende und/oder umlaufende, Schneidwerkzeug, ein, insbesondere das, Elektromotorantriebssystem, ein benutzerbetätigbares, insbesondere das benutzerbetätigbare, Bedienelement und eine, insbesondere elektrische, Überwachungs- und Steuerungseinrichtung auf. Das Elektromotorantriebssystem ist zum Erzeugen eines, insbesondere des, Drehmoments zum Antreiben des Schneidwerkzeugs ausgebildet bzw. konfiguriert. Die Überwachungs- und Steuerungseinrichtung ist zum automatischen Überwachen, ob ein, insbesondere das, Blockier-Kriterium erfüllt ist, ausgebildet bzw. konfiguriert. Das Blockier-Kriterium ist für eine, insbesondere die, Blockierung des Schneidwerkzeugs charakteristisch. Des Weiteren ist die Überwachungs- und Steuerungseinrichtung, falls das Blockier-Kriterium erfüllt ist und das Bedienelement betätigt ist, zum automatischen Erniedrigen des von dem Elektromotorantriebssystem erzeugten Drehmoments und zeitlich danach zum automatischen Erhöhen des von dem Elektromotorantriebssystem erzeugten Drehmoments ausgebildet bzw. konfiguriert. Das Blockier-Kriterium ist, dass trotz betätigtem Bedienelement und/oder trotz erzeugtem Drehmoment größer Null und/oder trotz eines, insbesondere des, das Drehmoment bewirkenden Stroms größer Null eine, insbesondere die, Drehzahl des Elektromotorantriebssystems und/oder des Schneidwerkzeugs gleich oder kleiner als ein, insbesondere der, Blockier-Drehzahl-Untergrenzwert ist. Das Bearbeitungsgerät ist eine, insbesondere die, Säge, insbesondere eine, insbesondere die, Kettensäge, ein, insbesondere der, Gesteinsschneider oder ein, insbesondere der, Trennschleifer. Das Bedienelement ist benutzerstellbar. Außerdem ist die Überwachungs- und Steuerungseinrichtung, falls das Blockier-Kriterium nicht erfüllt ist und das Bedienelement betätigt ist, zum automatischen Steuern oder zum automatischen Regeln des von dem Elektromotorantriebssystem erzeugten Drehmoments zum Erreichen einer, insbesondere der, Soll-Drehzahl des Elektromotorantriebssystems und/oder des Schneidwerkzeugs ausgebildet bzw. konfiguriert. Die Soll-Drehzahl ist abhängig von einer, insbesondere der, Stellung des Bedienelements. Ein, insbesondere der, Nicht-Blockier-Drehzahl-Untergrenzwert für die Soll-Drehzahl ist größer, insbesondere mindestens zweimal größer, als der Blockier-Drehzahl-Untergrenzwert.

Das Bearbeitungsgerät kann den/die gleichen Vorteil/e wie für das Verfahren zuvor beschrieben ermöglichen.

Insbesondere kann das Bearbeitungsgerät, insbesondere die Überwachungs- und Steuerungseinrichtung, zum Ausführen eines Verfahrens wie zuvor beschrieben ausgebildet bzw. konfiguriert sein. Zusätzlich oder alternativ kann das Bearbeitungsgerät wie zuvor für das Verfahren beschrieben ausgebildet bzw. konfiguriert sein. Weiter zusätzlich oder alternativ kann die Überwachungs- und Steuerungseinrichtung einen Mikrocontroller aufweisen, insbesondere sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: schematisch ein erfindungsgemäßes handgeführtes Bearbeitungsgerät,
- Fig. 2: das Bearbeitungsgerät der Fig. 1 mit einem Schneidwerkzeug beim Schneiden eines zu schneidenden Bearbeitungsstücks,
- Fig. 3: das Bearbeitungsgerät der Fig. 1 mit dem Schneidwerkzeug blockiert durch das Bearbeitungsstück der Fig. 2,
- Fig. 4: einen Graphen eines Schnittergebnisses über einer Vorschubkraft des Bearbeitungsgeräts der Fig. 1,
- Fig. 5: ein Ablaufdiagramm, insbesondere einen Graphen eines Stroms eines Elektromotorantriebssystems des Bearbeitungsgeräts der Fig. 1 über der Zeit, eines erfindungsgemäßen Verfahrens zum Betreiben des Bearbeitungsgeräts der Fig. 1,
- Fig. 6: ein weiteres Ablaufdiagramm, insbesondere einen weiteren Graphen des Stroms des Elektromotorantriebssystems über der Zeit, des erfindungsgemäßen Verfahrens,
- Fig. 7: ein nochmals weiteres Ablaufdiagramm, insbesondere einen Graphen einer Drehzahl des Elektromotorantriebssystems über der Zeit, des erfindungsgemäßen Verfahrens,
- Fig. 8: ein nochmals weiteres Ablaufdiagramm, insbesondere einen Graphen einer Betätigung eines Bedienelements des Bearbeitungsgeräts der Fig. 1 über der Zeit, des erfindungsgemäßen Verfahrens,
- Fig. 9: ein nochmals weiteres Ablaufdiagramm, insbesondere einen Graphen eines von dem Elektromotorantriebssystem erzeugten Drehmoments über der Zeit, des erfindungsgemäßen Verfahrens, und
- Fig. 10: ein nochmals weiteres Ablaufdiagramm, insbesondere einen weiteren Graphen des von dem Elektromotorantriebssystem erzeugten Drehmoments über der Zeit, des erfindungsgemäßen Verfahrens.

### DETAILLIERTE BESCHREIBUNG DER AUSFÜHRUNGSBEISPIELE

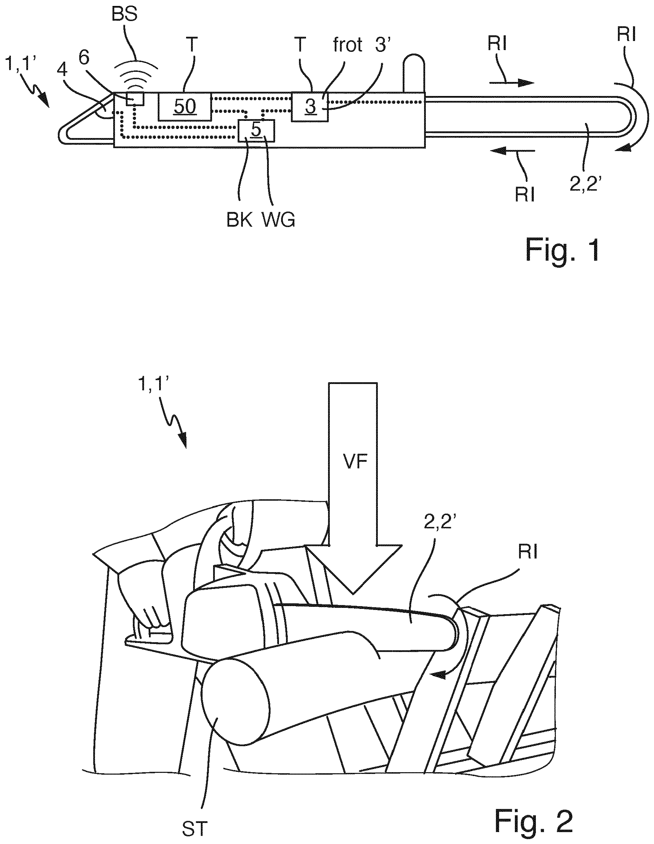

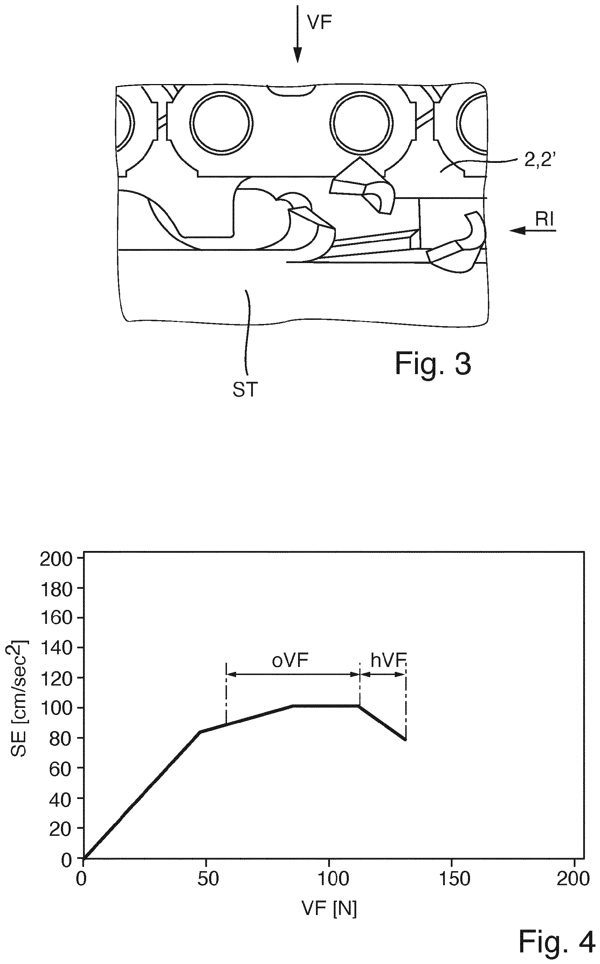

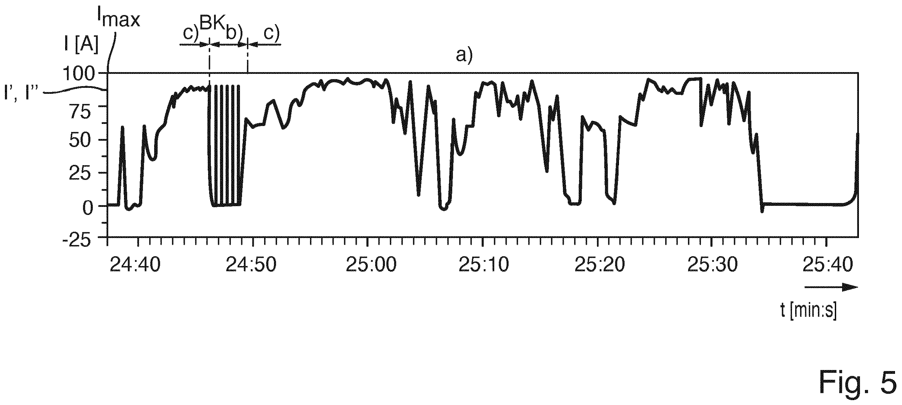

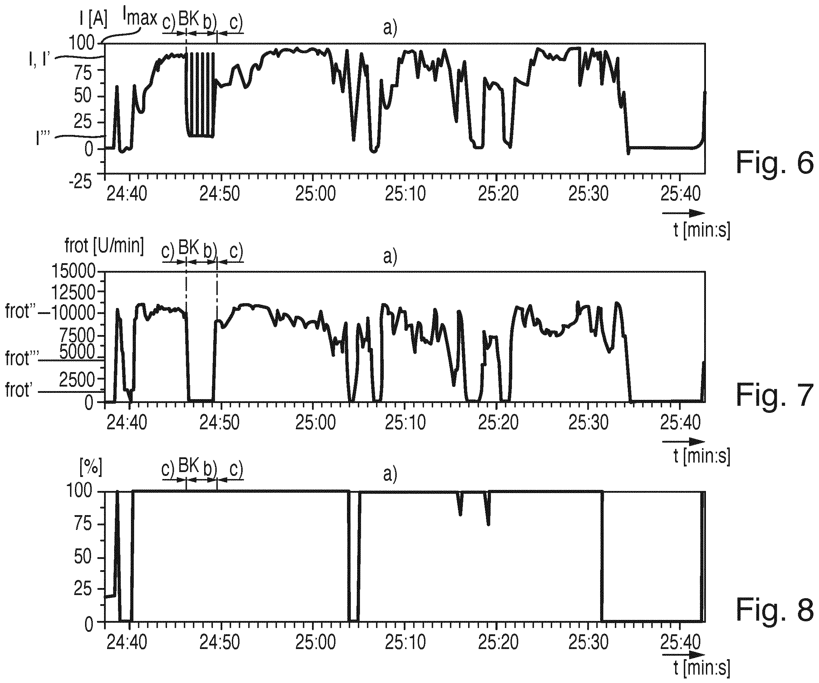

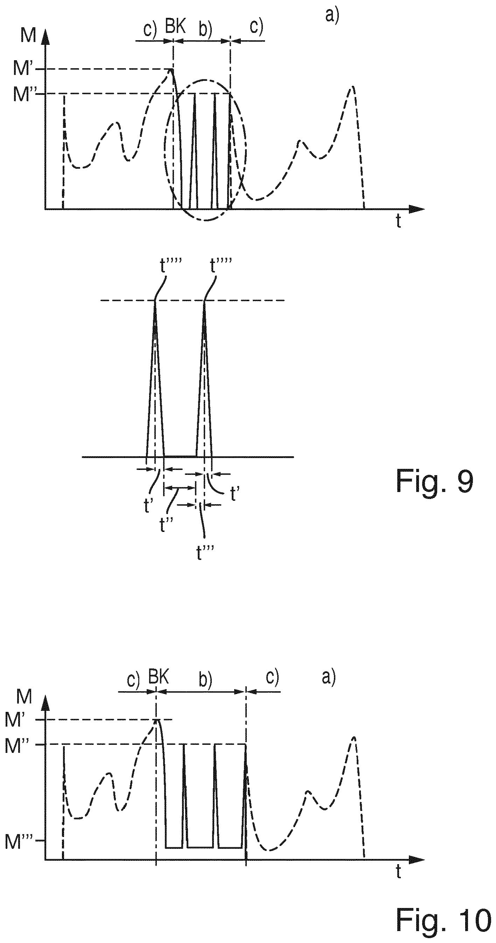

Fig. 1 bis 3 zeigen ein erfindungsgemäßes handgeführtes Bearbeitungsgerät 1. Das Bearbeitungsgerät 1 weist ein rotierendes und/oder umlaufendes Schneidwerkzeug 2, ein Elektromotorantriebssystem 3, ein benutzerbetätigbares Bedienelement 4 und eine Überwachungs- und Steuerungseinrichtung 5 auf. Das Elektromotorantriebssystem 3 ist zum Erzeugen eines Drehmoments M, wie in Fig. 9 und 10 gezeigt, zum Antreiben des Schneidwerkzeugs 2 ausgebildet, insbesondere erzeugt und treibt an, wie in Fig. 2 und 7 gezeigt. Die Überwachungs- und Steuerungseinrichtung 5 ist zum automatischen Überwachen, ob ein Blockier-Kriterium BK erfüllt ist, ausgebildet, insbesondere überwacht, wie in Fig. 5 bis 10 gezeigt. Das Blockier-Kriterium BK ist für eine Blockierung des Schneidwerkzeugs 2 charakteristisch, wie in Fig. 3 gezeigt. Des Weiteren ist die Überwachungs- und Steuerungseinrichtung 5, falls das Blockier-Kriterium BK erfüllt ist und das Bedienelement 4 betätigt ist, zum automatischen Erniedrigen des von dem Elektromotorantriebssystem 3 erzeugten Drehmoments M und zeitlich danach zum automatischen Erhöhen des von dem Elektromotorantriebssystem 3 erzeugten Drehmoments M ausgebildet, insbesondere erniedrigt und erhöht.

Fig. 1 bis 3 und 5 bis 10 zeigen ein erfindungsgemäßes Verfahren zum Betreiben des handgeführten Bearbeitungsgeräts 1. Das Verfahren weist die Schritte auf: a) automatisches Überwachen, das Blockier-Kriterium BK erfüllt ist, insbesondere mittels der Überwachungs- und Steuerungseinrichtung 5. Das Blockier-Kriterium BK ist für die Blockierung des Schneidwerkzeugs 2 charakteristisch. b), falls das Blockier-Kriterium BK erfüllt ist und das Bedienelement 4 betätigt ist, automatisches Erniedrigen des von dem

Elektromotorantriebssystem 3 erzeugten Drehmoments M und zeitlich danach automatisches Erhöhen des von dem Elektromotorantriebssystem 3 erzeugten Drehmoments M, insbesondere mittels der Überwachungs- und Steuerungseinrichtung 5.

Im Detail sind das Elektromotorantriebssystem 3, insbesondere ein Rotor 3' des Elektromotorantriebssystems 3, und das Schneidwerkzeug 2 kupplungsfrei, insbesondere drehfest, miteinander gekoppelt.

Des Weiteren ist in dem gezeigten Ausführungsbeispiel das Bearbeitungsgerät 1 eine Säge 1', insbesondere eine Kettensäge, und das Schneidwerkzeug 2 weist eine Sägekette 2' auf, insbesondere ist eine Sägekette 2`.

Im Betrieb des Bearbeitungsgeräts 1, im gezeigten Ausführungsbeispiel der Säge 1', insbesondere des Elektromotorantriebssystems 3, rotiert und/oder läuft das Schneidwerkzeug 2, im gezeigten Ausführungsbeispiel die Sägekette 2`, um, insbesondere in einer Richtung RI, falls das Schneidwerkzeug 2 nicht blockiert ist, wie in Fig. 2 gezeigt.

Beim Schneiden eines zu schneidenden Bearbeitungsstücks ST, im gezeigten Ausführungsbeispiel eines Baumstamms aus Holz, kann das Schneidwerkzeug 2, im gezeigten Ausführungsbeispiel ein Sägezahn des Schneidwerkzeugs 2, durch das Bearbeitungsstück ST blockiert werden, insbesondere bei einer zu hohen Vorschubkraft VF wie in Fig. 3 gezeigt.

Fig. 4 zeigt einen Graphen eines Schnittergebnisses SE über der Vorschubkraft VF. Im Detail ist ein Bereich optimaler Voschubkraft oVF und ein Bereich zu hoher Vorschubkraft hVF gezeigt. Bei zu hoher Vorschubkraft hVF wird das Schneidwerkzeug 2 blockiert bzw. rotiert nicht und/oder läuft nicht um.

Dies führt zu einem Abfall einer Drehzahl frot des Elektromotorantriebssystems 3 und/oder des Schneidwerkzeugs 2, insbesondere auf Null, wie in Fig. 6 für den Zeitpunkt t 24:46 min:s gezeigt.

Im Übrigen entstehen die Schwankungen der Drehzahl frot beispielsweise für die Zeitpunkte t 24:40 min:s bis 24:46 min:s und 24:49 min:s bis 25:04 min:s durch unterschiedliche Last, beispielsweise bei unterschiedlicher Vorschubkraft VF, also wenn der Benutzer das Bearbeitungsgerät 1 stärker oder weniger stark in das Bearbeitungsstück ST drückt.

Das Blockier-Kriterium BK ist, dass trotz betätigtem Bedienelement 4 und/oder trotz erzeugtem Drehmoment M größer Null und/oder trotz eines das Drehmoment M bewirkenden Stroms I größer Null die Drehzahl frot des Elektromotorantriebssystems 3 und/oder des Schneidwerkzeugs 2 gleich oder kleiner als ein Blockier-Drehzahl-Untergrenzwert frot' ist, wie in Fig. 5 bis 10 gezeigt, insbesondere für den Zeitpunkt t 24:46 min:s.

Insbesondere ist der Blockier-Drehzahl-Untergrenzwert frot' minimal Null, insbesondere minimal 1000 Umdrehungen/Minute (U/min), und/oder maximal 3000 U/min, insbesondere maximal 2000 U/min, im gezeigten Ausführungsbeispiel 1500 U/min.

Außerdem weist das Verfahren den Schritt auf: c) falls das Blockier-Kriterium BK nicht erfüllt ist und das Bedienelement 4 betätigt ist, automatisches Steuern oder automatisches Regeln des von dem Elektromotorantriebssystem 3 erzeugten Drehmoments M zum Erreichen einer Soll-Drehzahl frot" des Elektromotorantriebssystems 3 und/oder des Schneidwerkzeugs 2, insbesondere mittels der Überwachungs- und Steuerungseinrichtung 5.

Im Detail ist ein Nicht-Blockier-Drehzahl-Untergrenzwert frot‴ für die Soll-Drehzahl frot" größer als der Blockier-Drehzahl-Untergrenzwert frot`.

Insbesondere ist der Nicht-Blockier-Drehzahl-Untergrenzwert frot‴ minimal 3500 U/min und/oder maximal 5500 U/min, im gezeigten Ausführungsbeispiel 4500 U/min. Somit ist im gezeigten Ausführungsbeispiel der Nicht-Blockier-Drehzahl-Untergrenzwert frot‴ dreimal größer als der Blockier-Drehzahl-Untergrenzwert frot`.

Weiter ist das Bedienelement 4 benutzerstellbar.

Im Schritt c) ist die Soll-Drehzahl frot" abhängig von einer Stellung des Bedienelements 4.

Im gezeigten Ausführungsbeispiel ist die Soll-Drehzahl frot" 10000 U/min bei einer Stellung 100 % des Bedienelements 4.

Zusätzlich weist der Schritt b) auf: falls das Bedienelement minimal in eine Startstellung, insbesondere minimal 50 %, gestellt ist, automatisches Erniedrigen des von dem Elektromotorantriebssystem 3 erzeugten Drehmoments M und zeitlich danach automatisches Erhöhen des von dem Elektromotorantriebssystem 3 erzeugten Drehmoments M, insbesondere unabhängig von der Stellung des Bedienelements 4 von minimal der Startstellung.

Zudem wird im Schritt c) ein automatisches Erhöhen des erzeugten Drehmoments M oder des das Drehmoment M bewirkenden Stroms I auf einen Nicht-Blockier-Obergrenzwert M`, I' begrenzt, wie in Fig. 5, 6, 9 und 10 gezeigt. Insbesondere wird im Schritt b) das Drehmoment M oder der Strom I von dem Nicht-Blockier-Obergrenzwert M', I' erniedrigt.

Im gezeigten Ausführungsbeispiel ist der Nicht-Blockier-Obergrenzwert I' 87,5 Ampere (A).

Zusätzlich wird im Schritt b) das automatische Erhöhen des erzeugten Drehmoments M oder des Stroms I auf einen Blockier-Obergrenzwert M", I" begrenzt.

Im gezeigten Ausführungsbeispiel ist der Blockier-Obergrenzwert I" 87,5 A.

Weiter zusätzlich wird in der in Fig. 6 und 10 gezeigten Variante des Ausführungsbeispiels im Schritt b) das automatische Erniedrigen des erzeugten Drehmoments M oder des Stroms auf einen Blockier-Untergrenzwert M‴, I‴ größer Null begrenzt.

Im gezeigten Ausführungsbeispiel ist der Blockier-Untergrenzwert I‴ 12,5 A.

In der in Fig. 5 und 9 gezeigten Variante des Ausführungsbeispiels werden/wird im Schritt b) das erzeugte Drehmoment M und/oder der Strom I auf Null erniedrigt.

Des Weiteren wird der Schritt b) automatisch wiederholt, insbesondere bis ein Wiederholungsanzahl-Grenzwert WG, im gezeigten Ausführungsbeispiel von maximal neun, erreicht ist.

Außerdem ist der Blockier-Obergrenzwert M', I' abhängig von einer Anzahl der Wiederholungen des Schritts b). Insbesondere wird der Blockier-Obergrenzwert M', I' abhängig von einer Anzahl der Wiederholungen des Schritts b) verkleinert, beispielsweise zeitlich nach der vierten Wiederholung, insbesondere mittels der Überwachungs- und Steuerungseinrichtung 5.

Weiter weist das Verfahren den Schritt auf: Erfassen einer Temperatur T des Elektromotorantriebssystems 3 und/oder eines mit dem Bearbeitungsgerät 1 elektrisch verbundenen Akkumulators 50, insbesondere mittels der Überwachungs- und Steuerungseinrichtung 5. Der Wiederholungsanzahl-Grenzwert WG, der Nicht-Blockier-Obergrenzwert M', I' und/oder der Blockier-Obergrenzwert M", I" sind/ist abhängig von der erfassten Temperatur T. Insbesondere werden/wird der Wiederholungsanzahl-Grenzwert WG, der Nicht-Blockier-Obergrenzwert M`, I' und/oder der Blockier-Obergrenzwert M", I" abhängig von der erfassten Temperatur T eingestellt, insbesondere verkleinert, insbesondere mittels der Überwachungs- und Steuerungseinrichtung 5.

Zudem ist das Bearbeitungsgerät 1 zum elektrischen Verbinden mit verschiedenen Typen von Akkumulatoren 50 ausgebildet. Die verschiedenen Typen von Akkumulatoren 50 weisen verschiedene Maximalstromwerte Imax auf. Das Bearbeitungsgerät 1 ist mit einem der verschiedenen Typen von Akkumulatoren 50 elektrisch verbunden. Das Verfahren weist den Schritt auf: Erfassen des Typs des elektrisch verbundenen Akkumulators 50 und Bestimmen basierend auf dem erfassten Typ den Maximalstromwert Imax und/oder Erfassen des Maximalstromwerts Imax des elektrisch verbundenen Akkumulators 50, insbesondere mittels der Überwachungs- und Steuerungseinrichtung 5. Der Nicht-Blockier-Obergrenzwert M', I' und/oder der Blockier-Obergrenzwert M", I" sind/ist abhängig von dem Maximalstromwert Imax. Insbesondere werden/wird der Nicht-Blockier-Obergrenzwert M', I' und/oder der Blockier-Obergrenzwert M", I" abhängig von dem Maximalstromwert Imax eingestellt, insbesondere mittels der Überwachungs- und Steuerungseinrichtung 5.

Im gezeigten Ausführungsbeispiel ist der Maximalstromwert Imax 100 A.

Des Weiteren wird das automatische Erniedrigen mit einer Erniedrig-Zeitdauer t' von minimal 1 ms und/oder von maximal 2 s, im gezeigten Ausführungsbeispiel von 50 ms, ausgeführt.

Zusätzlich wird das automatische Erhöhen mit einer Erhöh-Zeitdauer t‴ von minimal 1 ms und/oder von maximal 2 s, im gezeigten Ausführungsbeispiel von 50 ms, ausgeführt.

Weiter zusätzlich wird das automatische Erhöhen zeitlich nach einer Pausen-Zeitdauer t" von minimal 1 ms und/oder von maximal 2 s, im gezeigten Ausführungsbeispiel von 250 ms, zeitlich nach dem automatischen Erniedrigen ausgeführt.

Weiter zusätzlich wird bei Wiederholung des Schritts b) das automatische Erniedrigen zeitlich nach einer Halte-Zeitdauer tʺʺ von minimal 0 ms und/oder von maximal 2 s, im gezeigten Ausführungsbeispiel von 0 ms, zeitlich nach dem automatischen Erhöhen ausgeführt.

Außerdem weist der Schritt b) auf: Ausgeben, insbesondere Anzeigen, eines benutzerwahrnehmbaren Blockier-Signals BS, insbesondere mittels einer Ausgabeeinrichtung 6 des Bearbeitungsgeräts 1.

Im gezeigten Ausführungsbeispiel weist die Ausgabeeinrichtung 6 eine LED auf, die im Schritt b) blinkt.

Im gezeigten Ausführungsbeispiel ist bis zu dem Zeitpunkt t 24:46 min:s das Blockier-Kriterium BK nicht erfüllt und das Bedienelement 4 ist betätigt. Somit wird der Schritt c) ausgeführt.

Ab dem Zeitpunkt t 24:46 min:s ist das Blockier-Kriterium BK erfüllt und das Bedienelement 4 ist betätigt. Somit wird der Schritt b) ausgeführt, insbesondere mehrfach.

Dies ermöglicht, dass der Benutzer die Blockierung wahrnehmen kann und somit das Schneidwerkzeug 2 entlasten kann. Somit ermöglicht dies, dass die Blockierung des Schneidwerkzeugs 2 gelöst werden kann.

Ab dem Zeitpunkt t 24:49 min:s ist das Blockier-Kriterium BK nicht, insbesondere mehr, erfüllt und das Bedienelement 4 ist betätigt. Somit wird der Schritt c) ausgeführt.

Insbesondere ist während des gesamten Zeitabschnitts, insbesondere von t 24:46 min:s bis 24:49 min:s, das Bedienelement 4 betätigt, insbesondere minimal in die Startstellung gestellt.

Wie die gezeigten und oben erläuterten Ausführungsbeispiele deutlich machen, stellt die Erfindung ein vorteilhaftes Verfahren zum Betreiben eines handgeführten Bearbeitungsgeräts und ein vorteilhaftes handgeführtes Bearbeitungsgerät bereit, das jeweils verbesserte Eigenschaften aufweist.

## Patentansprüche

1. Verfahren zum Betreiben eines handgeführten Bearbeitungsgeräts (1), wobei das Bearbeitungsgerät (1) aufweist:
- ein rotierendes und/oder umlaufendes Schneidwerkzeug (2),
- ein Elektromotorantriebssystem (3), wobei das Elektromotorantriebssystem (3) zum Erzeugen eines Drehmoments (M) zum Antreiben des Schneidwerkzeugs (2) ausgebildet ist, und
- ein benutzerbetätigbares Bedienelement (4), wobei das Verfahren die Schritte aufweist:
a) automatisches Überwachen, ob ein Blockier-Kriterium (BK) erfüllt ist, wobei das Blockier-Kriterium (BK) für eine Blockierung des Schneidwerkzeugs (2) charakteristisch ist, und
b) , falls das Blockier-Kriterium (BK) erfüllt ist und das Bedienelement (4) betätigt ist, automatisches Erniedrigen des von dem Elektromotorantriebssystem (3) erzeugten Drehmoments (M) und zeitlich danach automatisches Erhöhen des von dem Elektromotorantriebssystem (3) erzeugten Drehmoments (M),
- wobei das Blockier-Kriterium (BK) ist, dass trotz betätigtem Bedienelement (4) und/oder trotz erzeugtem Drehmoment (M) größer Null und/oder trotz eines das Drehmoment (M) bewirkenden Stroms (I) größer Null eine Drehzahl (frot) des Elektromotorantriebssystems (3) und/oder des Schneidwerkzeugs (2) gleich oder kleiner als ein Blockier-Drehzahl-Untergrenzwert (frot') ist,
- **dadurch gekennzeichnet, dass** das Bearbeitungsgerät (1) eine Säge (1'), insbesondere eine Kettensäge, ein Gesteinsschneider oder ein Trennschleifer ist,
- wobei das Bedienelement (4) benutzerstellbar ist,
- wobei das Verfahren den Schritt aufweist:
c) falls das Blockier-Kriterium (BK) nicht erfüllt ist und das Bedienelement (4) betätigt ist, automatisches Steuern oder automatisches Regeln des von dem Elektromotorantriebssystem (3) erzeugten Drehmoments (M) zum Erreichen einer Soll-Drehzahl (frot") des Elektromotorantriebssystems (3) und/oder des Schneidwerkzeugs (2),
- wobei im Schritt c) die Soll-Drehzahl (frot") abhängig von einer Stellung des Bedienelements (4) ist,
- wobei ein Nicht-Blockier-Drehzahl-Untergrenzwert (frot‴) für die Soll-Drehzahl (frot") größer, insbesondere mindestens zweimal größer, als der Blockier-Drehzahl-Untergrenzwert (frot') ist.

2. Verfahren nach Anspruch 1,
- wobei das Schneidwerkzeug (2) eine Sägekette (2'), ein Sägeblatt, ein Schneidblatt, ein Schneidmesser, eine Schleifkette oder eine Schleifscheibe aufweist, insbesondere ist.

3. Verfahren nach einem der vorhergehenden Ansprüche,
- wobei das Elektromotorantriebssystem (3), insbesondere ein Rotor (3') des Elektromotorantriebssystems (3), und das Schneidwerkzeug (2) kupplungsfrei, insbesondere drehfest, miteinander gekoppelt sind.

4. Verfahren nach einem der vorhergehenden Ansprüche,
- wobei der Schritt b) automatisch wiederholt wird, insbesondere bis ein Wiederholungsanzahl-Grenzwert (WG) erreicht ist.

5. Verfahren nach einem der vorhergehenden Ansprüche, insbesondere nach Anspruch 4,
- wobei das automatische Erniedrigen mit einer Erniedrig-Zeitdauer (t') von minimal 1 ms und/oder von maximal 2 s, insbesondere von 50 ms, ausgeführt wird, und/oder
- wobei das automatische Erhöhen mit einer Erhöh-Zeitdauer (t‴) von minimal 1 ms und/oder von maximal 2 s, insbesondere von 50 ms, ausgeführt wird, und/oder
- wobei das automatische Erhöhen zeitlich nach einer Pausen-Zeitdauer (t") von minimal 1 ms und/oder von maximal 2 s, insbesondere von 250 ms, zeitlich nach dem automatischen Erniedrigen ausgeführt wird, und/oder
- wobei bei Wiederholung des Schritts b) das automatische Erniedrigen zeitlich nach einer Halte-Zeitdauer (tʺʺ) von minimal 0 ms und/oder von maximal 2 s zeitlich nach dem automatischen Erhöhen ausgeführt wird.

6. Verfahren nach einem der vorhergehenden Ansprüche,
- wobei im Schritt c) ein automatisches Erhöhen des erzeugten Drehmoments (M) oder eines das Drehmoment (M) bewirkenden Stroms (I) auf einen Nicht-Blockier-Obergrenzwert (M', I') begrenzt wird, insbesondere und wobei im Schritt b) das Drehmoment (M) oder der Strom von dem Nicht-Blockier-Obergrenzwert (M', I') erniedrigt wird.

7. Verfahren nach einem der vorhergehenden Ansprüche,
- wobei im Schritt b) das automatische Erhöhen des erzeugten Drehmoments (M) oder des Stroms (I) auf einen Blockier-Obergrenzwert (M", I") begrenzt wird, und/oder
- wobei im Schritt b) das automatische Erniedrigen des erzeugten Drehmoments (M) oder des Stroms (I) auf einen Blockier-Untergrenzwert (M‴, I‴) größer Null begrenzt wird, insbesondere wobei der Blockier-Untergrenzwert (M‴, I‴) minimal 0,1-mal und/oder maximal 0,25-mal der Blockier-Obergrenzwert (M", I") ist.

8. Verfahren nach Ansprüchen 4 und 7,
- wobei der Blockier-Obergrenzwert (M", I") abhängig von einer Anzahl der Wiederholungen des Schritts b) ist, insbesondere verkleinert wird.

9. Verfahren nach Ansprüchen/Anspruch 4, 6, 7 und/oder 8, wobei das Verfahren den Schritt aufweist:
- Erfassen einer Temperatur (T) des Elektromotorantriebssystems (3) und/oder eines mit dem Bearbeitungsgerät (1) elektrisch verbundenen Akkumulators (50), und
- wobei der Wiederholungsanzahl-Grenzwert (WG), der Nicht-Blockier-Obergrenzwert (M', I') und/oder der Blockier-Obergrenzwert (M", I") abhängig von der erfassten Temperatur (T) sind/ist, insbesondere eingestellt werden/wird.

10. Verfahren nach einem der Ansprüche 6 bis 9,
- wobei das Bearbeitungsgerät (1) zum elektrischen Verbinden mit verschiedenen Typen von Akkumulatoren (50) ausgebildet ist, wobei die verschiedenen Typen von Akkumulatoren (50) verschiedene Maximalstromwerte (Imax) aufweisen, wobei das Bearbeitungsgerät (1) mit einem der verschiedenen Typen von Akkumulatoren (50) elektrisch verbunden ist,
wobei das Verfahren den Schritt aufweist:
- Erfassen des Typs des elektrisch verbundenen Akkumulators (50) und Bestimmen basierend auf dem erfassten Typ den Maximalstromwert (Imax) und/oder Erfassen des Maximalstromwerts (Imax) des elektrisch verbundenen Akkumulators (50), und
- wobei der Nicht-Blockier-Obergrenzwert (M', I') und/oder der Blockier-Obergrenzwert (M", I") abhängig von dem Maximalstromwert (I', Imax) sind/ist, insbesondere eingestellt werden/wird.

11. Verfahren nach einem der vorhergehenden Ansprüche,
- wobei der Schritt b) aufweist: falls das Bedienelement (4) minimal in eine Startstellung, insbesondere minimal 10 %, gestellt ist, automatisches Erniedrigen des von dem Elektromotorantriebssystem (3) erzeugten Drehmoments (M) und zeitlich danach automatisches Erhöhen des von dem Elektromotorantriebssystem (3) erzeugten Drehmoments (M), insbesondere unabhängig von der Stellung des Bedienelements (4) von minimal der Startstellung.

12. Verfahren nach einem der vorhergehenden Ansprüche,
- wobei der Schritt b) aufweist: Ausgeben, insbesondere Anzeigen, eines benutzerwahrnehmbaren Blockier-Signals (BS).

13. Handgeführtes Bearbeitungsgerät (1), insbesondere zum Ausführen eines Verfahrens nach einem der vorhergehenden Ansprüche, wobei das Bearbeitungsgerät (1) aufweist:
- ein rotierendes und/oder umlaufendes Schneidwerkzeug (2),
- ein Elektromotorantriebssystem (3), wobei das Elektromotorantriebssystem (3) zum Erzeugen eines Drehmoments (M) zum Antreiben des Schneidwerkzeugs (2) ausgebildet ist,
- ein benutzerbetätigbares Bedienelement (4), und
- eine Überwachungs- und Steuerungseinrichtung (5), wobei die Überwachungs- und Steuerungseinrichtung (5)
- zum automatischen Überwachen, ob ein Blockier-Kriterium (BK) erfüllt ist, wobei das Blockier-Kriterium (BK) für eine Blockierung des Schneidwerkzeugs (2) charakteristisch ist, und
- , falls das Blockier-Kriterium (BK) erfüllt ist und das Bedienelement (4) betätigt ist, zum automatischen Erniedrigen des von dem Elektromotorantriebssystem (3) erzeugten Drehmoments (M) und zeitlich danach zum automatischen Erhöhen des von dem Elektromotorantriebssystem (3) erzeugten Drehmoments (M) ausgebildet ist,
- wobei das Blockier-Kriterium (BK) ist, dass trotz betätigtem Bedienelement (4) und/oder trotz erzeugtem Drehmoment (M) größer Null und/oder trotz eines das Drehmoment (M) bewirkenden Stroms (I) größer Null eine Drehzahl (frot) des Elektromotorantriebssystems (3) und/oder des Schneidwerkzeugs (2) gleich oder kleiner als ein Blockier-Drehzahl-Untergrenzwert (frot') ist,
- **dadurch gekennzeichnet, dass** das Bearbeitungsgerät (1) eine Säge (1'), insbesondere eine Kettensäge, ein Gesteinsschneider oder ein Trennschleifer ist,
- wobei das Bedienelement (4) benutzerstellbar ist,
- wobei die Überwachungs- und Steuerungseinrichtung (5)
- , falls das Blockier-Kriterium (BK) nicht erfüllt ist und das Bedienelement (4) betätigt ist, zum automatischen Steuern oder zum automatischen Regeln des von dem Elektromotorantriebssystem (3) erzeugten Drehmoments (M) zum Erreichen einer Soll-Drehzahl (frot") des Elektromotorantriebssystems (3) und/oder des Schneidwerkzeugs (2) ausgebildet ist,
- wobei die Soll-Drehzahl (frot") abhängig von einer Stellung des Bedienelements (4) ist,
- wobei ein Nicht-Blockier-Drehzahl-Untergrenzwert (frot‴) für die Soll-Drehzahl (frot") größer, insbesondere mindestens zweimal größer, als der Blockier-Drehzahl-Untergrenzwert (frot') ist.

## Claims

1. Method for operating a hand-guided processing device (1), wherein the processing device (1) comprises:
- a rotating and/or circulating cutting tool (2),
- an electric motor drive system (3), wherein the electric motor drive system (3) is configured for generating a torque (M) for driving the cutting tool (2), and
- a user-operable control element (4),
wherein the method comprises the steps:
a) automatically monitoring whether a blocking criterion (BK) is fulfilled, wherein the blocking criterion (BK) is characteristic of a blocking of the cutting tool (2), and
b) if the blocking criterion (BK) is fulfilled and the control element (4) is operated, automatically lowering the torque (M) generated by the electric motor drive system (3), and temporally thereafter, automatically increasing the torque (M) generated by the electric motor drive system (3),
- wherein the blocking criterion (BK) is that, despite the operated control element (4) and/or despite the generated torque (M) being greater than zero and/or despite a current (I) effecting the torque (M) being greater than zero, a rotational speed (frot) of the electric motor drive system (3) and/or the cutting tool (2) is equal to or less than a blocking rotational speed lower limit value (frot'),
- **characterized in that** the processing device (1) is a saw (1'), in particular a chain saw, a stone cutter or a cutting grinder,
- wherein the control element (4) is user-adjustable,
- wherein the method comprises the step:
c) if the blocking criterion (BK) is not fulfilled and the control element (4) is operated, automatically controlling or automatically regulating the torque (M) generated by the electric motor drive system (3) for reaching of a nominal rotational speed (frot") of the electric motor drive system (3) and/or the cutting tool (2),
- wherein in step c) the nominal rotational speed (frot") is dependent on a setting of the control element (4),
- wherein a non-blocking rotational speed lower limit value (frot'") for the nominal rotational speed (frot") is greater, in particular at least twice as great, as the blocking rotational speed lower limit value (frot').

2. Method according to Claim 1,
- wherein the cutting tool (2) comprises, in particular is, a saw chain (2'), a saw blade, a cutting blade, a cutting knife, a grinding chain or a grinding disc.

3. Method according to any of the preceding claims,
- wherein the electric motor drive system (3), in particular a rotor (3') of the electric motor drive system (3), and the cutting tool (2) are coupled together without a clutch, in particular rotationally fixedly.

4. Method according to any of the preceding claims,
- wherein step b) is repeated automatically, in particular until a repetition number limit value (WG) is reached.

5. Method according to any of the preceding claims, in particular according to Claim 4,
- wherein the automatic lowering is performed with a lowering duration (t') of at least 1 ms and/or at most 2 s, in particular 50 ms, and/or
- wherein the automatic increasing is performed with an increase duration (t'") of at least 1 ms and/or at most 2 s, in particular 50 ms, and/or
- wherein the automatic increasing is performed temporally after a pause duration (t") of at least 1 ms and/or at most 2 s, in particular 250 ms, temporally after the automatic lowering, and/or
- wherein on repetition of step b), the automatic lowering is carried out temporally after a holding duration (t"") of at least 0 ms and/or at most 2 s, temporally after the automatic increasing.

6. Method according to any of the preceding claims,
- wherein in step c), an automatic increasing of the generated torque (M) or a current (I) effecting the torque (M) is limited to a non-blocking upper limit value (M', I'), in particular and wherein in step b), the torque (M) or the current (I) is lowered from the non-blocking upper limit value (M', I').

7. Method according to any of the preceding claims,
- wherein in step b), the automatic increasing of the generated torque (M) or current (I) is limited to a blocking upper limit value (M", I"), and/or
- wherein in step b), the automatic lowering of the generated torque (M) or current (I) is limited to a blocking lower limit value (M'", I‴) greater than zero, in particular wherein the blocking lower limit value (M‴, I‴) is at least 0.1 times and/or at most 0.25 times the blocking upper limit value (M", I").

8. Method according to Claims 4 and 7,
- wherein the blocking upper limit value (M", I") is dependent on a number of repetitions of step b), in particular is reduced.

9. Method according to Claim 4, Claim 6, Claim 7 and/or Claim 8, wherein the method comprises the step:
- detecting a temperature (T) of the electric motor drive system (3) and/or of an accumulator (50) electrically connected to the processing device (1), and
- wherein the repetition number limit value (WG), the non-blocking upper limit value (M', I') and/or the blocking upper limit value (M", I") is/are dependent on the detected temperature (T), in particular is/are adjusted.

10. Method according to any of Claims 6 to 9,
- wherein the processing device (1) is configured for electrical connection to various types of accumulators (50), wherein the various types of accumulators (50) have different maximum current values (Imax), wherein the processing device (1) is electrically connected to one of the various types of accumulators (50),
wherein the method comprises the step:
- detecting the type of the electrically connected accumulator (50) and determining the maximum current value (Imax) on the basis of the detected type, and/or detecting the maximum current value (Imax) of the electrically connected accumulator (50), and
- wherein the non-blocking upper limit value (M', I') and/or the blocking upper limit value (M", I") is/are dependent on the maximum current value (I', Imax), in particular is/are adjusted.

11. Method according to any of the preceding claims,
- wherein step b) comprises: if the control element (4) is set at least in a starting position, in particular to at least 10%, automatically lowering the torque (M) generated by the electric motor drive system (3), and temporally thereafter, automatically increasing the torque (M) generated by the electric motor drive system (3), in particular independently of the setting of the control element (4) in at least the starting position.

12. Method according to any of the preceding claims,
- wherein step b) comprises: output, in particular display, of a user-perceptible blocking signal (BS).

13. Hand-guided processing device (1), in particular for executing a method according to any of the preceding claims, wherein the processing device (1) comprises:
- a rotating and/or circulating cutting tool (2),
- an electric motor drive system (3), wherein the electric motor drive system (3) is configured for generating a torque (M) for driving the cutting tool (2),
- a user-operable control element (4), and
- a monitoring and control device (5), wherein the monitoring and control device (5) is configured for:
- automatically monitoring whether a blocking criterion (BK) is fulfilled, wherein the blocking criterion (BK) is characteristic of a blocking of the cutting tool (2), and
- if the blocking criterion (BK) is fulfilled and the control element (4) is operated, automatically lowering the torque (M) generated by the electric motor drive system (3), and temporally thereafter, automatically increasing the torque (M) generated by the electric motor drive system (3),
- wherein the blocking criterion (BK) is that, despite the operated control element (4) and/or despite the generated torque (M) being greater than zero and/or despite a current (I) effecting the torque (M) being greater than zero, a rotational speed (frot) of the electric motor drive system (3) and/or the cutting tool (2) is equal to or less than a blocking rotational speed lower limit value (frot'),
- **characterized in that** the processing device (1) is a saw (1'), in particular a chain saw, a stone cutter or a cutting grinder,
- wherein the control element (4) is user-adjustable,
- wherein the monitoring and control device (5) is configured for:
- if the blocking criterion (BK) is not fulfilled and the control element (4) is operated, automatically controlling or automatically regulating the torque (M) generated by the electric motor drive system (3) for reaching of a nominal rotational speed (frot") of the electric motor drive system (3) and/or the cutting tool (2),
- wherein the nominal rotational speed (frot") is dependent on a setting of the control element (4),
- wherein a non-blocking rotational speed lower limit value (frot'") for the nominal rotational speed (frot") is greater, in particular at least twice as great, as the blocking rotational speed lower limit value (frot').

## Revendications

1. Procédé de fonctionnement d'un appareil d'usinage (1) guidé à la main, l'appareil d'usinage (1) comprenant :
- un outil de coupe (2) rotatif et/ou tournant,
- un système d'entraînement à moteur électrique (3), le système d'entraînement à moteur électrique (3) étant configuré pour générer un couple de rotation (M) pour entraîner l'outil de coupe (2), et
- un élément de commande (4) actionnable par l'utilisateur,
le procédé comprenant les étapes suivantes :
a) surveillance automatique si un critère de blocage (BK) est satisfait, le critère de blocage (BK) étant caractéristique d'un blocage de l'outil de coupe (2), et
b) dans le cas où le critère de blocage (BK) est satisfait et l'élément de commande (4) est actionné, diminution automatique du couple (M) généré par le système d'entraînement à moteur électrique (3) et chronologiquement après cela, augmentation automatique du couple (M) généré par le système d'entraînement à moteur électrique (3),
- le critère de blocage (BK) étant que, malgré un élément de commande (4) actionné et/ou malgré un couple (M) généré supérieur à zéro et/ou malgré un courant (I) provoquant le couple (M) supérieur à zéro, une vitesse de rotation (frot) du système d'entraînement à moteur électrique (3) et/ou de l'outil de coupe (2) est égale ou inférieure à une valeur limite inférieure de vitesse de rotation de blocage (frot'),
- **caractérisé en ce que** l'appareil d'usinage (1) est une scie (1'), notamment une scie à chaîne, un dispositif de coupe de roche ou une tronçonneuse,
- l'élément de commande (4) étant réglable par l'utilisateur,
- le procédé comprenant l'étape suivante :
c) dans le cas où le critère de blocage (BK) n'est pas satisfait et l'élément de commande (4) est actionné, commande automatique ou régulation automatique du couple (M) généré par le système d'entraînement à moteur électrique (3) pour atteindre une vitesse de rotation de consigne (frot") du système d'entraînement à moteur électrique (3) et/ou de l'outil de coupe (2),
- à l'étape c), la vitesse de rotation de consigne (frot") étant dépendante d'une position de l'élément de commande (4),
- une valeur limite inférieure de vitesse de rotation de non-blocage (frot''') pour la vitesse de rotation de consigne (frot") étant supérieure, notamment au moins deux fois supérieure, à la valeur limite inférieure de vitesse de rotation de blocage (frot').

2. Procédé selon la revendication 1,
- l'outil de coupe (2) possédant, notamment étant, une chaîne de scie (2'), une lame de scie, une lame de coupe, un couteau de coupe, une chaîne d'affûtage ou une meule.

3. Procédé selon l'une des revendications précédentes,
- le système d'entraînement à moteur électrique (3), notamment un rotor (3') du système d'entraînement à moteur électrique (3), et l'outil de coupe (2) étant couplés l'un à l'autre sans accouplement, notamment en rotation solidaire.

4. Procédé selon l'une des revendications précédentes,
- l'étape b) étant répétée automatiquement, notamment jusqu'à ce qu'une valeur limite de nombre de répétitions (WG) soit atteinte.

5. Procédé selon l'une des revendications précédentes, notamment selon la revendication 4,
- la diminution automatique étant effectuée avec une durée de diminution (t') d'au moins 1 ms et/ou d'au plus 2 s, notamment de 50 ms, et/ou
- l'augmentation automatique étant effectuée avec une durée d'augmentation (t‴) d'au moins 1 ms et/ou d'au plus 2 s, notamment de 50 ms, et/ou
- l'augmentation automatique étant exécutée chronologiquement après une durée de pause (t") d'au moins 1 ms et/ou d'au plus 2 s, notamment de 250 ms, chronologiquement après la diminution automatique, et/ou
- lors de la répétition de l'étape b), la diminution automatique étant exécutée chronologiquement après une durée de maintien (t'''') d'au moins 0 ms et/ou d'au plus 2 s chronologiquement après l'augmentation automatique.

6. Procédé selon l'une des revendications précédentes,
- avec lequel, à l'étape c), une augmentation automatique du couple (M) généré ou d'un courant (I) provoquant le couple (M) est limitée à une valeur limite supérieure de non-blocage (M', I'), notamment et avec lequel à l'étape b), le couple (M) ou le courant est diminué de la valeur limite supérieure de non-blocage (M', I').

7. Procédé selon l'une des revendications précédentes,
- avec lequel, à l'étape b), l'augmentation automatique du couple (M) ou du courant (I) généré est limitée à une valeur limite supérieure de blocage (M", I''), et/ou
- avec lequel, à l'étape b), la diminution automatique du couple (M) ou du courant (I) généré est limitée à une valeur limite inférieure de blocage (M‴, I‴) supérieure à zéro, notamment avec lequel la valeur limite inférieure de blocage (M‴, I‴) est au minimum de 0,1 fois et/ou au maximum de 0,25 fois la valeur limite supérieure de blocage (M", I'').

8. Procédé selon les revendications 4 et 7,
- la valeur limite supérieure de blocage (M", I") étant fonction d'un nombre de répétitions de l'étape b), étant notamment réduite.

9. Procédé selon les revendications 4, 6, 7 et/ou 8, ledit procédé comprenant l'étape suivante :
- détection d'une température (T) du système d'entraînement à moteur électrique (3) et/ou d'un accumulateur (50) relié électriquement à l'appareil d'usinage (1), et
- la valeur limite de nombre de répétitions (WG), la valeur limite supérieure de non-blocage (M', I') et/ou la valeur limite supérieure de blocage (M", I'') étant dépendantes de la température (T) détectée, étant notamment réglées en fonction de celle-ci.

10. Procédé selon l'une des revendications 6 à 9,
- l'appareil d'usinage (1) étant configuré pour être connecté électriquement à différents types d'accumulateurs (50), les différents types d'accumulateurs (50) présentant différentes valeurs de courant maximal (Imax), l'appareil d'usinage (1) étant connecté électriquement à l'un des différents types d'accumulateurs (50),
le procédé comprenant l'étape suivante :
- détection du type de l'accumulateur (50) connecté électriquement et détermination, sur la base du type détecté, de la valeur de courant maximale (Imax) et/ou détection de la valeur de courant maximale (Imax) de l'accumulateur (50) connecté électriquement, et
- la valeur limite supérieure de non-blocage (M', I') et/ou la valeur limite supérieure de blocage (M", I'') étant dépendantes de la valeur de courant maximale (I', Imax), étant notamment réglées en fonction de celle-ci.

11. Procédé selon l'une des revendications précédentes,
- l'étape b) comprenant : dans le cas où l'élément de commande (4) est placé au minimum dans une position de démarrage, en particulier au minimum à 10 %, diminution automatique du couple (M) généré par le système d'entraînement à moteur électrique (3) et chronologiquement après cela, augmentation automatique du couple (M) généré par le système d'entraînement à moteur électrique (3), notamment indépendamment de la position de l'élément de commande (4) par rapport au minimum de la position de démarrage.

12. Procédé selon l'une des revendications précédentes,
- l'étape b) comprenant : délivrance en sortie, notamment affichage, d'un signal de blocage (BS) perceptible par l'utilisateur.

13. Appareil d'usinage (1) guidé à la main, notamment destiné à la mise en œuvre d'un procédé selon l'une des revendications précédentes, l'appareil d'usinage (1) comprenant :
- un outil de coupe (2) rotatif et/ou tournant,
- un système d'entraînement à moteur électrique (3), le système d'entraînement à moteur électrique (3) étant configuré pour générer un couple de rotation (M) pour entraîner l'outil de coupe (2),
- un élément de commande (4) actionnable par l'utilisateur, et
- un dispositif de surveillance et de commande (5), le dispositif de surveillance et de commande (5) étant configuré pour
- surveiller automatiquement si un critère de blocage (BK) est satisfait, le critère de blocage (BK) étant caractéristique d'un blocage de l'outil de coupe (2), et
- dans le cas où le critère de blocage (BK) est satisfait et l'élément de commande (4) est actionné, diminution automatique du couple (M) généré par le système d'entraînement à moteur électrique (3) et chronologiquement après cela, augmentation automatique du couple (M) généré par le système d'entraînement à moteur électrique (3),
- le critère de blocage (BK) étant que, malgré un élément de commande (4) actionné et/ou malgré un couple (M) généré supérieur à zéro et/ou malgré un courant (I) provoquant le couple (M) supérieur à zéro, une vitesse de rotation (frot) du système d'entraînement à moteur électrique (3) et/ou de l'outil de coupe (2) est égale ou inférieure à une valeur limite inférieure de vitesse de rotation de blocage (frot'),
- **caractérisé en ce que** l'appareil d'usinage (1) est une scie (1'), notamment une scie à chaîne, un dispositif de coupe de roche ou une tronçonneuse,
- l'élément de commande (4) étant réglable par l'utilisateur,
- le dispositif de surveillance et de commande (5) étant configuré pour,
- dans le cas où le critère de blocage (BK) n'est pas satisfait et l'élément de commande (4) est actionné, commander automatiquement ou réguler automatiquement le couple (M) généré par le système d'entraînement à moteur électrique (3) pour atteindre une vitesse de rotation de consigne (frot") du système d'entraînement à moteur électrique (3) et/ou de l'outil de coupe (2),
- la vitesse de rotation de consigne (frot") étant dépendante d'une position de l'élément de commande (4),
- une valeur limite inférieure de vitesse de rotation de non-blocage (frot''') pour la vitesse de rotation de consigne (frot") étant supérieure, notamment au moins deux fois supérieure, à la valeur limite inférieure de vitesse de rotation de blocage (frot').
